Europäisches Patentamt

European Patent Office

Office européen des brevets

(11) Veröffentlichungsnummer: **0 322 668**
**A1**

(12) # EUROPÄISCHE PATENTANMELDUNG

(21) Anmeldenummer: 88120987.8

(22) Anmeldetag: 15.12.88

(51) Int. Cl.⁴: **E02D 29/02 , E02D 17/20 , A01G 9/02 , E04C 1/39**

(30) Priorität: 31.12.87 CH 5119/87

(43) Veröffentlichungstag der Anmeldung:
05.07.89 Patentblatt 89/27

(84) Benannte Vertragsstaaten:
AT CH DE FR IT LI

(71) Anmelder: **Kalbermatten, Otto**
**Bergjiweg 5**
**CH-3930 Visp(CH)**

(72) Erfinder: **Kalbermatten, Otto**
**Bergjiweg 5**
**CH-3930 Visp(CH)**

(74) Vertreter: **Keller, René, Dr. et al**
**Patentanwälte Dr. René Keller & Partner**
**Postfach 12**
**CH-3000 Bern 7(CH)**

(54) **Bauelement zum Aufbau einer Mauer und Mauer aufgebaut mit den Bauelementen.**

(57) Das Bauelement (2) hat eine einen unten und oben offenen Hohlraum umschließende Wandung, der durch eine zur Vorderfläche des Bauelements (2) parallele Trennwand (7) unterteilt ist. Auf einem Absatz (15) in der vorderen Kammer (9) wird eine Winkelplatte (18), deren einer Schenkel eine Bodenplatte (26) und deren anderer Schenkel eine Stützplatte (28) bildet, gelegt.

Aus reihenweise versetzt aufeinander geschichteten Bauelementen (2) und je zwei formschlüssig mit ihnen verbundenen vertikalen Verbindungsplatten (3) wird eine bepflanzbare Mauer aufgebaut. Die Erde (11) für die Bepflanzung wird in die Kammern (9) gefüllt, wobei die Bodenplatte (26), der in die Kammer (9) eingelegten Winkelplatte (18) die Erde (11) im vorderen Teil der Kammer (9) zurückhält. Die Stützplatte (28) stellt einen mit Erde (11) gefüllten Kanal zwischen der Erde (11) in der Kammer (9) und der Erde (11) in bzw. auf der Kammer (9) der übernächsten unteren Reihe her, damit einerseits die Wurzeln der Pflanzen bis in die unteren Kammern (9) vordringen können und andererseits ein Feuchtigkeitsausgleich zwischen den übereinanderliegenden Kammern (9) gegeben ist.

Die an der Rückseite der Mauer liegenden hinteren Kammern (10) und die an sie angrenzenden Räume (23) zwischen den Verbindungsplatten (3) werden armiert und mit Beton (13) gefüllt.

Fig. 2

Fig. 3

## Bauelement zum Aufbau einer Mauer und Mauer aufgebaut mit den Bauelementen.

Die Erfindung betrifft ein Bauelement zum Aufbau einer Mauer gemäß dem Oberbegriff des Patentanspruchs 1 und eine Mauer aufgebaut mit den Bauelementen gemäß dem Oberbegriff des Patentanspruchs 11.

Bauelemente wie sie aus der CH-A 612 238 bekannt sind, bestehen aus Hohlsteinen mit zwei durch eine Versteifungswand getrennten Kammern, die mit Erde gefüllt werden können. Die aus diesen Bauelementen hergestellten Mauern, insbesondere Hangsicherungsmauern können mit Pflanzen begrünt werden, wodurch sie sich gut in das bestehende Landschaftsbild eingliedern. Durch das Verzahnen der Hohlsteine, das Gewicht der Erde in den Hohlsteinen und die klammernden Kräfte der Wurzeln der Bepflanzung besitzt sie eine gewisse Standfestigkeit; große Hangschubkräfte kann sie aber nicht aufnehmen.

Ein steiler Neigungswinkel einer Mauer ermöglicht eine gute Ausnützung des verbauten Landes. Soll diese Forderung mit den bekannten Bauelementen erfüllt werden, so können nur Bauelemente geringer Höhe verwendet werden, da sonst die Erde an der Vorderseite der Mauer herausfällt. Eine geringe Bauelementenhöhe bedingt bei vorgegebener Mauerhöhe eine Vielzahl von zu verlegenden und aufeinander zu stapelnden Elementen, die zwangsläufig zu einer wenig stabilen Mauer führen.

Die Mauer mit den relativ kleinen Elemente hat eine Vielzahl kleiner nahezu vollständig voneinander isolierter Bepflanzungskammern. Bei starker Sonneneinstrahlung trocknen sie deshalb aufgrund des geringen Feuchtigkeitsspeichers schnell aus. Bei hohem Wasseranfall durch Regen oder durch Sickerwasser im dahinterliegenden Hang kann die Standfestigkeit der Mauer gefährdet sein.

Der Erfindung liegt die Aufgabe zugrunde, Bauelemente für eine möglichst steile, bepflanzbare Mauer hoher Eigenstabilität zu schaffen, bei der ein Herunterfallen der eingefüllten Erde an der Maueraußenseite vermieden, eine Verbindung übereinander angeordneter Bauelemente durch Erde und/oder Beton ermöglicht und eine hohe Austrocknungsresistenz erreicht wird.

Die erfindungsgemäße Lösung dieser Aufgabe ist hinsichtlich der Bauelemente durch die im Anspruch 1 und hinsichtlich der mit den Bauelementen errichteten Mauer durch die im Anspruch 11 angegebenen Merkmale gekennzeichnet.

Die durch die Erfindung erzielten Vorteile sind im wesentlichen darin zu sehen, daß eine mit den Bauelementen errichtete Hangsicherungsmauer bei einem äußerst steilen Neigungswinkel einwandfrei bepflanzbar ist. Der für eine gute Ausnützung des verbauten Landes erwünschte, möglichst steile Neigungswinkel wird erreicht durch die Bodenplatte im der Maueraußenseite zugewandten Teil des unten und oben offenen Bauelements. Vorzugsweise wird eine Winkelplatte in das Bauelement eingelegt, deren einer Schenkel die Bodenplatte und deren anderer Schenkel eine nach unten ragende Stützplatte bildet, wodurch ein mit Erde füllbarer Kanal zwischen den übereinanderliegenden Bauelementen entsteht. Hierdurch können großvolumige Bauelemente geschaffen werden, die die Erde an der Maueraußenseite halten, den Pflanzenwurzeln eine Ausbreitungsmöglichkeit zu anderen Bauelementen ermöglichen und auch bei starker Sonneneinstrahlung genügend Feuchtigkeit für die Bepflanzung speichern können.

Bei einer Weiterbildung der Erfindung kann die an der Maueraußenseite liegende Erde durch Rohrstücke mit dem dahinterlingenden Hang feuchtigkeitsmäßig verbunden werden, um das sich an der Rückseite der Mauer befindliche Wasser, das bei bekannten Hangsicherungsmauern deren Stabilität gefährdet, zur Mauervorderseite zu leiten und zur Befeuchtung der Pflanzen zu verwenden.

Bei einer anderen Weiterbildung der Erfindung ist das Bauelement durch eine zur Maueraußenseite parallele Trennwand geteilt und die Bauelemente einer Mauerreihe durch je zwei Verbindungsplatten miteinander verbunden. Die vordere Kammer kann wie oben bereits beschrieben durch ein Rohrstück mit dem Hang verbunden, mit Erde gefüllt und bepflanzt werden, während die hintere Kammer und der Raum zwischen den Verbindungsplatten mit Ar mierungseisen versehen und mit Beton gefüllt werden kann. Hierdurch ist eine äußerst stabile, begrünbare Hangsicherungsmauer entstanden, deren Bepflanzung auch bei starker Sonnenbestrahlung nicht vertrocknet.

Die Stabilitätseigenschaften und die pflanztechnische Nutzung der Mauer sind so gut, daß diese Mauer in einer anderen Weiterbildung der Erfindung z. B. als freistehende Schallschutzwand ausgeführt werden kann.

Die Bodenplatte bzw. Winkelplatte ist vorzugsweise nicht fest mit dem Bauelement verbunden und wird zweckmäßig erst beim Aufbau der Mauer in die Bauelemente eingelegt. Das Bauelement kann deshalb ohne größere vorstehende Teile einfach hergestellt werden und erleidet auch beim Transport keine Beschädigung an ausladenden oder hervorstehenden Teilen.

Im folgenden werden Ausführungsbeispiele der Erfindung anhand der Zeichung näher erläutert. Es zeigen:

Fig. 1 eine perspektivische Darstellung einer Hangsicherungsmauer,

Fig. 2 eine Draufsicht auf ein Bauelement mit eingelegter Winkelplatte,

Fig. 3 einen Schnitt entlang der Linie III - III in Fig.2,

Fig. 4 eine Vorderansicht einer Verbindungsplatte in Blickrichtung IV in Fig. 1,

Fig. 5 einen Schnitt entlang der Linie V - V in Fig. 4 durch die Verbindungsplatte,

Fig. 6 eine Draufsicht auf die Verbindungsplatte

Fig.7 einen Schnitt entlang der Linie VII - VII in Fig. 1 durch die Hangsicherungsmauer,

Fig. 8 eine Draufsicht auf eine Winkelplatte,

Fig. 9 eine Seitenansicht der Winkelplatte,

Fig. 10 einen Fig. 3 entsprechenden Schnitt durch eine Variante des Bauelements und

Fig. 11 eine Draufsicht auf übereinander gestapelte Bauelemente einer frei stehenden Mauer.

Die Hangsicherungsmauer 1 wird aus Bauelementen 2, Winkelplatten 18 und Verbindungsplatten 3 aufgebaut. Im folgenden werden zuerst die Bauelemente 2, die Winkelplatten 18 und die Verbindungsplatten 3, und dann die Herstellung einer Hangsicherungsmauer beschrieben.

Das Bauelement 2 ist ein Betongußelement. Es besteht aus einer Vorder- 4, einer Rückwand 5, zwei Seitenwänden 6 und einer Zwischenwand 7 zwischen der Vorder- 4 und der Rückwand 5. Die beiden Seitenwände 6 sind parallel zueinander und stehen senkrecht zur Rück- 5, und Zwischenwand 7, sowie zum mittleren Teil der Vorderwand 4. Die Vorderwand 4 hat drei Teilflächen, wobei ein vorderer mittlerer Teil, der parallel zur Rückwand 5 liegt und je zwei anschließende Flächen, die unter 45° zu den Seitenwänden abgewinkelt sind, vorhanden sind. Die Rückwand 5, die Seitenwände 6 und die Vorderwand 4 bilden zusammen ein geschlossenes Vieleck. Das Bauelement 2 ist an seiner Ober- und Unterseite vollständig offen. Die Vorderwand 4 ist aus ästhetischen Gründen mit Längsriefen 8 an ihren Außenflächen ausgestattet. Die Zwischenwand 7 bildet eine Trennwand zwischen einer Kammer 9 und einer Kammer 10. Die Kammer 9 hat die Vorderwand 4 als eine ihrer Begrenzungsflächen, und die Kammer 10 die Rückwand 5. Die Kammer 10 hat in jeder ihrer Seitenwände 6 je zwei etwa auf einer horizontalen Mittellinie liegende, annähernd miteinander fluchtende Löcher 12. Der Durchmesser der Löcher 12 ist so groß gewählt, daß Armierungseisen 14 hindurch gesteckt werden können. Am unteren Rand der Innenseite der Kammer 9 ist ein Absatz 15 zur Aufnahme der Winkelplatte 18 vorhanden.

Beide Seitenwände 6 haben an ihren Außenseiten gegenüber der Trennwand 7 und der Rückwand 5 je eine Nut 16, die von der oberen Kante der Seitenwand 6 bis zur unteren Kante läuft. Die Nuten 16 sind sowohl an ihrem oberen, als auch an ihrem unteren Ende offen. Die Tiefe der Nuten 16 liegt etwa zwischen einem Drittel und der Hälfte der Wandstärke der Seitenwand 6. Eckenverstärkungen 19 sind an den Stoßkanten zwischen den Seitenwänden 6 und der Trennwand 7, und zwischen den Seitenwänden 6 und der Rückwand 5 ausgebildet. Aufgrund einer äußeren Eckenverstärkung 22 an jeder der äußeren Stoßkanten zwischen der Rückwand 5 und den Seitenwänden 6 ist die Rückwand 5 um die Breite einer äußeren Eckverstärkung 22 in das Bauelement 2 nach innen versetzt. Die Eckverstärkungen 19 und 22 liegen jeweils gegenüberliegend zu den Nuten 16 in der Kammer 9 bzw. 10, bzw. an der Außenseite der Rückwand 5. Sie gewährleisten um die Nuten 16 herum eine ausreichende Stabilität des Bauelements 2.

Die Winkelplatte 18 ist ein Betongußteil, deren einer Schenkel eine Bodenplatte 26 und deren anderer Schenkel eine Stützplatte 28 bildet. Die Kontur der Bodenplatte 26 ist an ihrer der Stützplatte 28 abgewandten Seite bis auf eine Toleranz gleich der zur Maueraußenseite zugewandten Innenseite der Kammer 9. Die Bodenplatte 26 ist so bemessen, daß der rückwärtige Teil der Kammer 9 unten offen bleibt. Die Höhe der Stützplatte 28 ist abhängig von der Höhe des Bauelements 2 und dem Abstand der Vorderfläche der Kammer 9 von der Trennwand 7; sie beträgt im Beispiel annähernd ein Drittel der Höhe des Bauelements 2. Die Materialstärke der Winkelplatte 18 beträgt einige Zentimeter, dick genug um das Gewicht der feuchten Erde 11 und der Bepflanzung zu tragen.

Die Verbindungsplatte 3 ist ebenfalls ein Betongußteil. Ihre Höhe und ihre Wandstärke ist bis auf eine Toleranz gleich der der Seitenwände 6. Ihre Länge entspricht der Summe aus der Länge der Trennwand 7 und der doppelten Fugentiefe verringert durch eine Montagetoleranz. Entlang ihres oberen und unteren Längsrandes hat die Verbindungsplatte 3 je einen integrierten Ansatz 24 und 25 senkrecht an je einer der Plattenflächen. An den beiden Plattenstirnseiten verjüngen sich die Ansätze 24 und 25 bis auf die Materialstärke der Verbindungsplatte 3, damit die Verbindungsplatte in die Nuten 16 eingeschoben werden kann. Die Breite der Ansätze 24 und 25 ist durch den Versatz der übereinander angeordneten Reihen aus Bauelementen 2 und Verbindungsplatten 3, wie unten beschrieben, gegeben und ist etwas größer als die Wandstärke der Bauelemente 2.

Die Rückwand 5, die Trennwand 7 und die Verbindungsplatten 3 haben in der Mitte ihrer Längsseite an deren Ober- und Unterkante je eine Aussparung 20 bzw. 21 zum Einlegen eines Rohrstückes 27.

Die Rückwand 5 hat am unteren Rand in den äußeren Ecken je einen Vorsprung 17, der beim Aufbau der Mauer 1 als Anschlag, im Sinne einer Montagehilfe, an der Oberkante der Rückwand 5 des unter dem Bauelement 2 versetzt liegende Bauelements 2 der unteren Reihe dient.

Zur Herstellung der Hangsicherungsmauer 1 werden die hohlen Bauelemente 2 entlang eines horizontalen ebenen, planierten Absatzes als Fundament am Fuß des Hanges abwechselnd mit zwei Verbindungsplatten 3 verlegt. Die Bauelemente 2 werden mit ihren Seitenwänden 6 etwa senkrecht zur Hangfläche und mit ihrer Kammer 10 zum Hang gewandt, verlegt. In die beiden seitlichen Nuten 16 wird je eine Verbindungsplatte 3 eingefügt. An diese beiden Verbindungsplatten 3 wird anschließend wieder eine Bauelement 2 mit seinen Nuten 16 angefügt. Dieses abwechselnde Aneinanderfügen von Bauelementen 2 und Verbindungsplatten 3 wird fortgesetzt bis die Breite der gewünschten Hangsicherung erreicht ist.

Durch die Löcher 12 in den Seitenwänden 6 werden Armierungseisen 14 gesteckt, deren Länge von der Breite der Hangsicherungsmauer bzw. bei gebogener Mauer von deren Raduis abhängt.

In jede der oberen Aussparungen 20 werden Rohre 27 gelegt. Die Länge der Rohre 27 richtet sich danach, wie weit sie in den Hang hineingesteckt werden müssen. Ihre minimale Länge ist so groß wie die Tiefe der Kammer 10 bzw. die Tiefe der Kammer 23 plus Versatz einer horizontalen Reihe zur anderen, wie weiter unten beschrieben.

In der zweiten Reihe der aufzurichtenden Hangsicherungsmauer 1 werden die Bauelemente 2 derart über die Verbindungsplatten 3 gesetzt, daß sie mit dem Vorsprung 17 an der Oberkante der hangseitigen Verbindungsplatte 3 hangseitig anliegen. Da der obere Ansatz 24 kurz vor jeder der beiden Plattenstirnseiten verjüngt ist, liegt der Vorsprung 17 nicht am Ansatz 24 an. Die Bauelemente 2 liegen dann immer auf je einer Seitenwand 6 der beiden unter ihnen seitlich versetzt liegenden Bauelemente 2 der unteren Reihe. Der untere Ansatz 25 der Verbindungsplatten 3 der zweiten Reihe deckt den Zwischenraum zwischen den Verbindungsplatten 3 der zweiten Reihe und der Trennwand 7 bzw. der Rückwand 5 des Bauelements 2 der ersten Reihe ab und der obere Ansatz 24 der Verbindungsplatten 3 der untersten Reihe den Zwischenraum zwischen den Verbindungsplatten 3 der untersten und der Trennwand 7 bzw. der Rückwand 5 der Bauelemente 2 der zweiten Reihe. In jede der Kammern 9 wird eine Winkelplatte 18 eingelegt. Anschließend werden in die Löcher 12 der rückseitigen Kammern 10 der Bauelemente 2 wieder Armierungseisen 14 gesteckt.

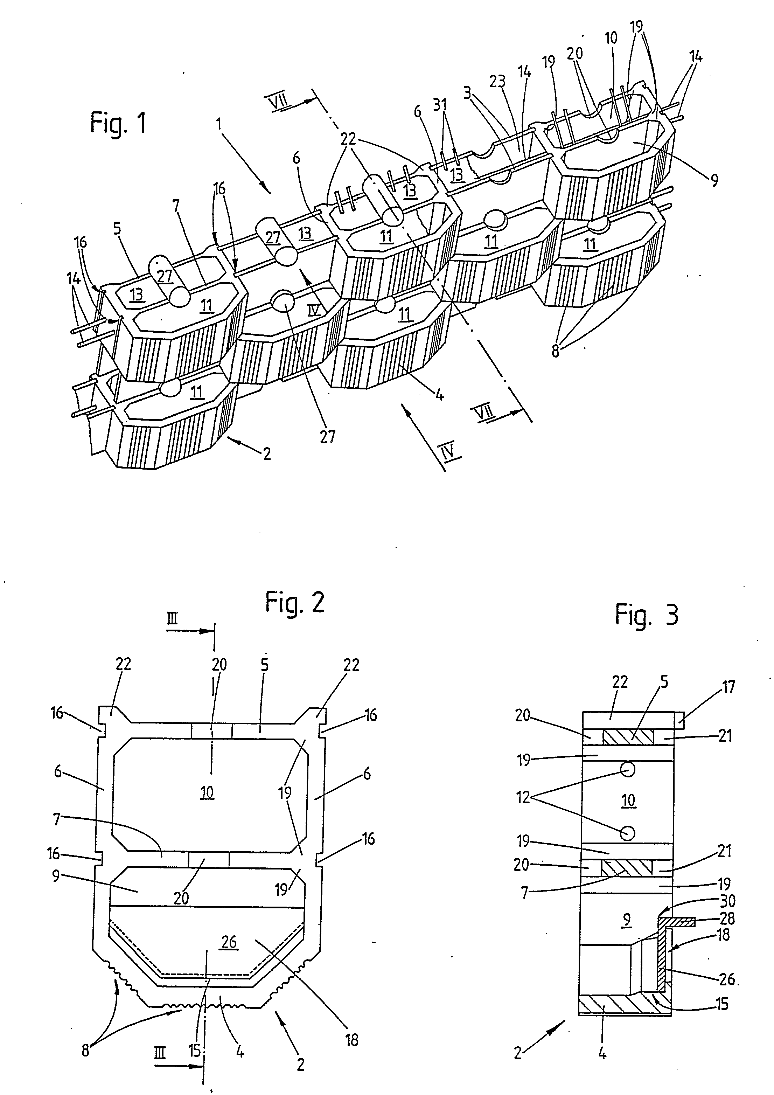

Nach der zweiten Reihe folgt eine dritte, eine vierte, usw.. Die Bauelemente 2 liegen übereinander immer auf Lücke. Etwa nach der dritten, vierten oder fünften Reihe werden in die Kammern 10 und 23 weitere Armierungeisen 31 (in Figur 1 nur teilweise dargestellt) von oben nach unten gesteckt und an den horizontalen Armierungseisen 14 gegen seitliches Verrutschen mit Bindedraht gesichert. Anschließend wird in die Kammern 10 und 23 der obersten Reihe Beton 13 eingefüllt, der auch die darunterliegenden Kammern 10 und 23 füllt, und falls notwendig mit einem Vibrator verdichtet. Die Ansätze 24 und 25 an den Verbindungsplatten verhindern ein Herausquellen des Betons 13 aus den Zwischenräumen zwischen der Trennwand 7 bzw. der Rückwand 5 und den darunter bzw. darüberliegenden Verbindungplatten 3. Analog wird mit den weiteren Reihen der Hangsicherungsmauern verfahren.

Die aufgerichtete Mauer 1 soll begrünt werden. Ein gutes Gedeihen der Pflanzen setzt u. a. aureichende Feuchtigkeit und Belüftung eines ausreichend großen Erdvolumens voraus. Aus diesem Grunde wird die Mauer 1 so aufgebaut, daß übereinderliegende Kammern 9 untereinander eine Erdverbindung besitzen und über Rohrstücke 27 mit dem hinter der Mauer 1 liegenden Hang verbunden sind.

Die Erde 11 zur Bepflanzung der Mauer 1 kann während des Aufbaus der Mauer 1 oder erst nach deren Fertigstellung in die Kammern 9 gefüllt werden, wobei die Bodenplatte 26 der in die Kammer 9 eingelegten Winkel platte 18 die Erde 11 im vorderen Teil der Kammer 9 zurückhält. Je länger die Stützplatte 28, je tiefer die Kammer 9 ist bzw. je weiter sich die Bodenplatte 26 in Richtung der Kammertiefe erstreckt, desto größer kann die Höhe der Bauelemente 2 sein, ohne daß Erde 11 aus der Kammer 9 über die Maueraußenseite herausfällt. Die Oberfläche der Erde 11 auf der Kammer 9 steigt schräg in Richtung Trennwand 7 zur unteren Kante der Stützplatte 28 hin an. Die Stützplatte 28 stellt einen mit Erde 11 gefüllten Kanal zwischen der Erde 11 in der Kammer 9 und der Erde 11 in bzw. auf der Kammer 9 der übernächsten unteren Reihe her, damit einerseits die Wurzeln der Pflanzen bis in die unteren Kammern 9 vordringen können und andererseits ein Feuchtigkeitsaustausch zwischen den übereinanderliegenden Kammern 9 gegeben ist.

Die Rohrstücke 27 verlaufen bei fertiggestellter Hangsicherungsmauer 1 von der Erde 11 in den Kammern 9 zum Erdreich des hinter der Mauer 1 liegenden Hangs und sind teilweise oder vollständig mit Erde gefüllt. Diese Rohrstücke 27 bewirken die Entwässerung des Hanges und verringern hierdurch den Hangdruck auf die Mauer 1, belüften das Erdreich hinter der Mauer 1 und befeuchten die Erde 11 in den Kammern 9, um eine optimale Bewachsung zu garantieren. Auch können die Wurzeln durch die Rohrstücke 27 in den Hang eindringen. Regenwasser oder Wasser aus dem Hang läuft über die Winkelplatten 18 und die Kammern 9 an der Mauer 1 nach unten. Zur Bewässerung der Erde 11 in den Kammern 9 genügt es deshalb, nur die oberste Reihe zu bewässern. Dazu kann über der oberen Reihe ein gelochtes Bewässerungsrohr verlegt werden.

Durch das Verlegen von Armierungseisen 14, 31 und Ausgießen der Kammern 10 und 23 mit Beton 13 vereinigt die Mauer 1 als Hangsricherungsmauer die hohe Stabilität einer Schwergewichtsmauer, verstärkt durch eine Armierung, mit den Vorteilen einer Mauer aus Hohlsteinen, wie u. a. Begrünbarkeit, aufgelockertes landschaftsfreundliches Erscheinungsbild und ergibt zusätzlich durch einsetzbare Rohrstüche 27 eine einfache Entwässerungs- und Belüftungsmöglichkeit des dahinterliegenden Hanges, sowie eine Befeuchtung der an der Maueraußenseite liegenden Bepflanzung.

Ist anstelle des ebenen, planierten Absatzes am Fuß des Hanges eine festes Fundament notwendig, kann wie schon oben beschrieben eine Reihe aus Bauelementen 2 und Verbindungsplatten 3, verlegt, armiert und die Kammern 9 und 10 der Bauelemente 2 sowie die Kammer 23 mit Beton ausgegossen werden. Hierauf kann dann die Mauer 1 aufgebaut werden.

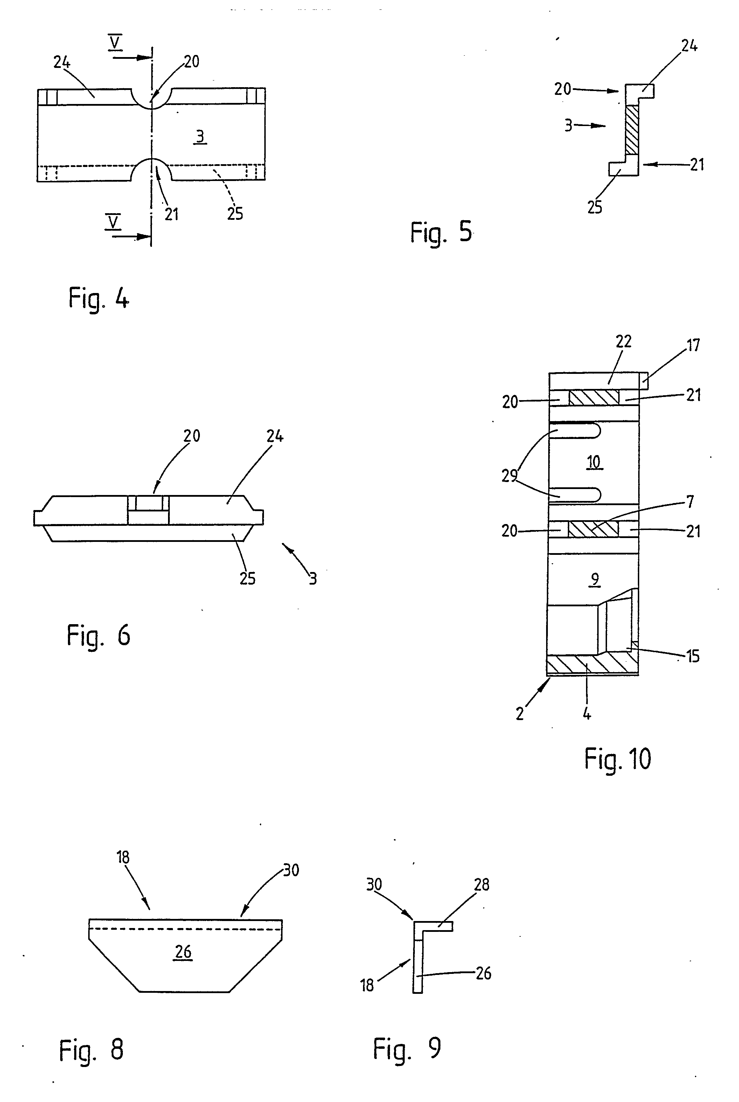

Anstelle der Löcher 12 können als Variante - wie in Fig. 10 dargestellt -in den Seitenwänden 6 Schlitze 29 vorhanden sein, in die von oben her die Armierungseisen 14 eingelegt werden können.

Anstelle der beiden Aussparungen 20, 21 in der Rückwand 5, der Trennwand 7 und den beiden Verbindungsplatten 3 in der Mitte ihrer Längsseite an deren Ober- und Unterkante zum Einlegen eines Rohrstückes 27 kann auch nur jeweils eine entsprechend größere Aussparung entweder an der Ober-oder Unterkante vorhanden sein. Bei relativ hohem Wasseranfall des Hanges kann das Rohrstück über die Vorderfläche der Mauer 1 hinausgezogen werden, damit das Wasser direkt abfließen kann. Ebenfalls kann der Spalt zwischen der Kante 30 der Winkelplatte 18 und der Trennwand 7 mit grobkörnigem Kies gegen das Auswaschen von Erde 11 geschlossen werden.

Die Rückwand 5 des Bauelements 2 kann ebenso wie die hangseitige zweite Verbindungsplatte 3 ganz oder teilweise weggelassen werden. Der einzufüllende Beton 13 wird dann von der Trennwand 7 und dem Hang, bzw. von der vorderen Verbindungsplatte 3 und dem Hang begrenzt.

Die Ansätze 24 und 25 an den Verbindungsplatten 3 zum Abdichten der Zwischenräume zwischen der Rückwand 5 und der Verbindungsplatte 3, bzw. der Trennwand 7 und der anderen Verbindungsplatte 3 in den übereinanderliegenden Reihen gegen auslaufenden Beton 13, können weggelassen werden. Um die Abdichtung dennoch zu ermöglichen, können die Nuten 16 an den Seitenwänden 6 oben und unten um die Breite des Ansatzes 24 bzw. 25 geneigt und die Höhe der Verbindungsplatten entsprechend verlängert werden.

Aufgrund der guten Standfestigkeit der Mauer 1 kann sie auch senkrecht ohne Versatz hochgezogen werden. Auch bei dieser Mauer werden die Kammern 9 mit Erde gefüllt und mit Pflanzen versehen.

Ebenfalls können zwei Wände so gegeneinander aufgestellt werden, daß die Kammern 9 jeweils nach außen zeigen und damit eine vordere und eine hintere bepflanzbare Fläche entsteht. Eine solche freistehende Mauer läßt sich z. B. als Sichtblende oder Lärmschutzwand verwenden. Dabei können Schlitze in der Rückwand 5 der Bauelemente 2 vorgesehen werden, wie sie bei der Variante in Fig. 10 für die Seitenwände 6 dargestellt sind, in die weitere Armierungseisen eingelegt werden, die die beiden Mauerhälften aus identischen Bauelementen 2 miteinander verankern.

In den Zwischenraum zwischen den Rückwänden 5 der Bauelemente 2 der Wände kann Erde als Feuchtigkeitsspeicher eingefüllt werden. Die Bauelemente können als Variante derart gestaltet sein, daß in der Rückwand zwei Aussparungen für Rohrstücke und in der Trennwand zwischen den beiden Kammern eine Aussparung für eines der beiden Rohrstücke vorhanden sind. Jeweils ein Rohrstück endet in der der Außenwand abgewandten Kammer, und das andere Rohrstück in der Kammer an der Außenwand. Das erste Rohrstück verbindet die beiden zur Außenwand abgewandten Kammern miteinander und dient als Durchführung für eine Armierung zur Verklammerung der Kammern. Das zweite Rohrstück verbindet die Kammern an der Außenwand mit der Erde zwischen den Wänden und sorgt, nachdem diese Kammern mit Erde gefüllt und bepflanzt sind, für den notwendigen Feuchtigkeitsaustausch.

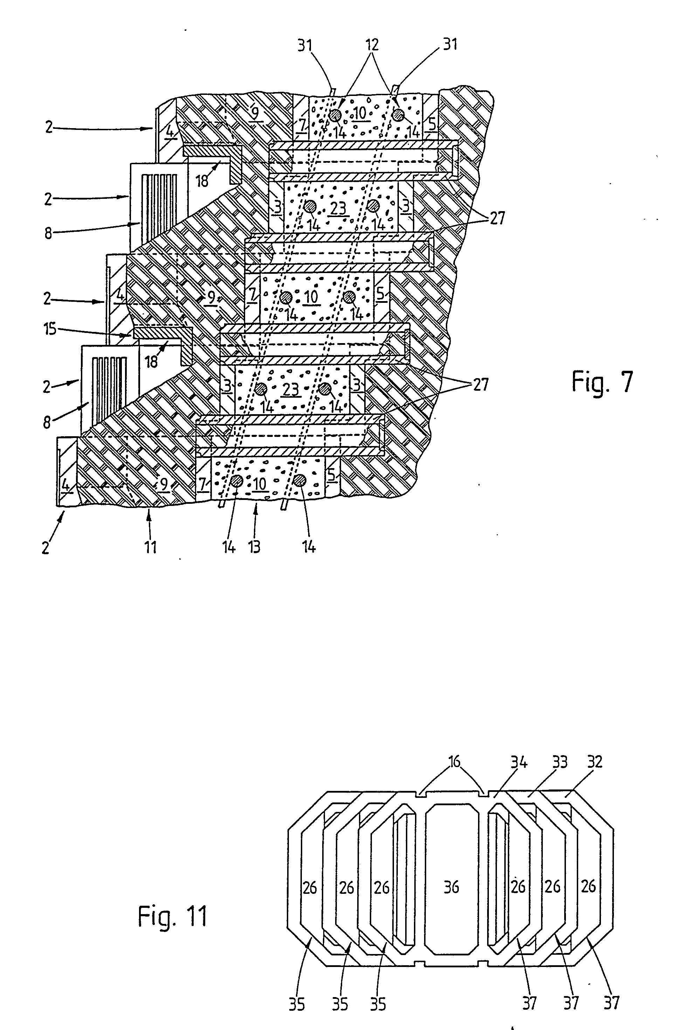

Als weitere Variante kann die freistehende Mauer aus Bauelelementen 32, 33, 34, die sich von einer Maueraußenseite zur anderen erstrecken aufgebaut werden. Jedes der in Fig. 11 dargestellten Bauelemente 32, 33, 34 hat drei hintereinander angeordnete Kammern 35, 36, 37. Die beiden Kammern 35 und 37 sind spiegelbildlich aufgebaut. Die beiden Kammern 35 und 36 bzw. 36 und 37 haben je eine gemeinsame Trennwand. Die Tiefenausdehnung der Bauelemente 32, 33, 34 ist unterschiedlich abgestuft und wird durch die Tiefe der Kammer 36 bestimmt. Für den Aufbau der freistehenden Mauer werden reihenweise Bauelemente gleicher Tiefenausdehnung so gelegt, daß ihre Kammern 35 und 37 an der Maueraußenseite liegen. Die einzelnen Bauelemente sind durch die Verbindungsplatten 3 miteinander verbunden. In der untersten Reihe liegen die Bauelemente 32 mit der größten Tiefenausdehnung. Die Tiefe der Bauelemente der nächst höheren Reihe ist um den doppelten Versatz der Reihe zur darunterliegenden Reihe kleiner. Die Bau elemente liegen immer auf je einer Seitenwand der beiden unter ihren seitlich versetzten Bauelemente der darunterliegenden Reihe. In die Kammern 35 und 37 dieser zweituntersten Reihe werden Winkelplatten 18 eingelegt. Diese Winkelplatten 18 sind identisch zu den Winkelplatten 18, die in den oben beschriebenen Mauern 1 verwendet wurden. Je eine der Bodenplatten 26 verschließt den an der Maueraußenseite liegenden Teil der Kammer 35 bzw. 37. Die Stützplatte 28 liegt in einem solchen Abstand von der Maueraußenseite, daß nach Einfüllen der Erde 11 eine Erdverbindung zwischen den übereinanderliegenden Bauelementen vorhanden ist ohne daß Erde aus der Mauer herausrutscht. Das Bauelement 33 in Fig. 11 liegt in der dritten und das Bauelement 34 in der fünften Reihe über dem Bauelement 32 der untersten Reihe. Nach dem Aufbau jeder Reihe können horizontale Armierungseisen, und nach der dritten, vierten oder fünften horizontalen Reihe vertikale Armierungseisen in die Kammern 36 und die Kammern zwischen den Bauelementen und den beiden Verbindungsplatten 3 eingelegt und anschließend mit Beton gefüllt werden. Nach Abbinden des Beton können die Kammern 35 und 37 mit Erde gefüllt und bepflanzt werden.

**Ansprüche**

1. Bauelement (2) mit einer einen oben und unten offenen Hohlraum umschließenden Wandung zum Aufbau einer durch Aufsetzen jeweils eines Bauelements (2) auf zwei nebeneinander liegende Bauelemente (2) gebildeten, mindestens an der oder den Außenseiten mit Erde (11) gefüllten Mauer (1), gekennzeichnet durch mindestens eine Bodenplatte (26), durch die der an der Maueraußenseite oder die an den Maueraußenseiten anzuordnenden Teile des Hohlraums unten verschlossen oder verschließbar ist bzw. sind.

2. Bauelement (2) nach Anspruch 1, gekennzeichnet durch eine Stützplatte (28), die an der Bodenplatte (26) oder an der Wandung so angeformt oder halterbar ist, daß sie nach unten über den unteren Rand der Wandung vorsteht, um einen hohen, gegen Herausfallen der Erde (11) gesicherten Erdverbindungsraum zwischen übereinanderliegenden Bauelementen (2) zu schaffen.

3. Bauelement (2) nach Anspruch 2, dadurch gekennzeichnet, daß die Boden- (26) und die Stützplatte (28) die Schenkel eines Winkelstückes (18) bilden.

4. Bauelement (2) nach einem der Ansprüche 1 bis 3, dadurch gekennzeichnet, daß die Bodenplatte (26) und/oder die Stützplatte (28) bzw. die Winkelplatte (18) einsetzbar ist.

5. Bauelement (2) nach einem der Ansprüche 1 bis 4, dadurch gekennzeichnet, daß die Wandung mindestens eine Stufe (15) hat, durch die die Bodenplatte (26) und/oder die Stützplatte (28) bzw. die Winkelplatte (18) gehalten wird bzw. werden.

6. Bauelement (2) nach einem der Anspüche 1 bis 5, dadurch gekennzeichnet, dass der Hohlraum durch mindestens eine von oben nach unten verlaufende Trennwand (7) in mindestens zwei Kammern (9, 10) unterteilt ist, und die Bodenplatte (26) nur in der bzw. den an der Maueraußenseite bzw. -seiten anzuordnenden Kammer (9) bzw. Kammern (35, 37) liegt.

7. Bauelement (2) nach Anspruch 6, dadurch gekennzeichnet, daß die Bodenplatte (26) so bemessen bzw. ausgebildet ist, daß die an der Maueraußenseite bzw. -seiten anzuordnende bzw. anzuordnenden Kammern (9, 35, 37) im rückwärtigen Teil wenigstens teilweise unten offen ist bzw. sind.

8. Bauelement (2) nach einem der Ansprüche 1 bis 7, dadurch gekennzeichnet, daß das Bauelement (2) an seiner Außenwand zur formschlüssigen, lösbaren Verbindung für Verbindungsplatten (3) ausgebildet ist.

9. Bauelement (2) nach Anspruch 6 oder 7, dadurch gekennzeichnet, daß am oberen und /oder unteren Rand der Trennwand (7) oder Trennwände und/oder der Wandung (5) in einer Linie je eine Aussparung (20, 21) zum Einlegen eines Rohrstückes (27) vorgesehen ist.

10. Bauelement (2) nach einem der Ansprüche 1 bis 9, dadurch gekennzeichnet, daß an der Unterseite der Wandung (5) mindestens ein Vorsprung (17) als Montagehilfe vorhanden ist.

11. Mauer (1) hergestellt mit den Bauelementen (2) nach Anspruch 1, wobei jeweils ein Bauelement (2) auf zwei distanziert nebeneinanderliegende Bauelementen (2) aufgesetzt ist, und die Bauelemente (2) wenigstens teilweise mit Erde (11) gefüllt sind, dadurch gekennzeichnet, daß der an der Maueraußenseite angeordnete Teil (4) oder die an den Maueraußenseiten angeordneten Teile des Hohlraums der über der untersten Bauelementenreihe liegenden Bauelemente (2) durch je eine Bodenplatte (26) unten verschlossen ist bzw. sind, und durch den unten offenen Teil des Hohlraums eine Erdverbindung zwischen den Hohlräumen (9) übereinander liegender Bauelemente (2) besteht.

12. Mauer (1) nach Anspruch 11, hergestellt mit den Bauelementen (2) nach Anspruch 2 oder 3, dadurch gekennzeichnet, daß vom der Maueraußenseite abgewandten Rand jeder Bodenplatte (26) eine Stützplatte (28) in einem solchen Abstand vom an der Maueraußenseite liegenden Wandungsteil (4) soweit über den unteren Rand der Wandung der Bauelemente (2) nach unten ragt, daß die die übereinander liegenden Baulemente (2) verbindende Erde (11) nicht aus der Mauer (1) herausrutscht.

13. Mauer (1) nach Anspruch 11 oder 12, hergestellt mit den Bauelementen (2) nach Anspruch 6, dadurch gekennzeichnet, daß die an der bzw. den Maueraußenseiten liegenden, Bauelementkammern (9) mit Erde (11) gefüllt sind, die Bodenplatten (26) den äußeren Teil (4) der an der Maueraußenseite bzw. -seiten angeordneten Kammern (9, 35, 37) der über der untersten Bauelementenreihe liegenden Bauelemente (2) verschließen, und die Erdverbindung durch den unten wenigstens teilweise offenen, hinteren Teil hindurchgeht, und daß wenigstens ein Teil der anderen Baulementkammern (10, 36) wenigstens teilweise mit Beton (13) gefüllt ist.

14. Mauer (1) nach einem der Ansprüche 11 bis 13, hergestellt mit den Bauelementen (2) gemäß Anspruch 8, bei der die Bauelemente (2) in Abständen nebeneinander in annähernd horizontalen Reihen angeordnet sind, dadurch gekennzeichnet, daß benachbarte Bauelemente (2) in jeder der horizontalen Reihen durch zwei vertikale Verbindungsplatten (3) verbunden sind, wobei der Raum (23) zwischen den benachbarten Bauelementen (2) und den beiden Verbindungsplatten (3) vorzugsweise wenigstens teilweise mit Beton (13) ausgegossen ist.

15. Mauer (1) nach den Ansprüchen 13 und 14 hergestellt mit Bauelementen (2) nach Anspruch 10, dadurch gekennzeichnet, daß mindestens in einem Teil der Aussparungen (20, 21) der Trennwand (7) bzw. -wände und/oder Wandung (5) der Bauelemente (2) und in Aussparungen (29, 21) der darüber bzw. darunter liegenden Verbindungsplatten (3) je ein Rohrstück (27) liegt, um hinter der Mauer (1) liegendes Erdreich mit der Erde (11) in den Kammern (9) an der Maueraußenseite zu ver- binden.

Fig. 1

Fig. 2

Fig. 3

Fig. 4

Fig. 5

Fig. 6

Fig. 8

Fig. 9

Fig. 10

Fig. 7

Fig. 11

**Europäisches Patentamt**

**EUROPÄISCHER RECHERCHENBERICHT**

Nummer der Anmeldung

EP 88 12 0987

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 406 136 (TUBAG) * Seite 1, Absatz 1; Seite 2, Absätze 1,3; Seite 17, Absatz 4; Seite 18, Absätze 1,2; Seite 19, Zeilen 3-10; Figuren 1,2,5,6,9 * | 1,4,5,7 ,11 | E 02 D 29/02 E 02 D 17/20 A 01 G 9/02 E 04 C 1/39 |
| A | --- | 6,13 | |
| X | EP-A-0 215 994 (SCHEIWILLER) * Spalte 2, Zeilen 1-7; Spalte 4, Zeilen 9-53; Figuren 1-10 * | 1,4,5,7 ,8,11 | |
| A | --- | 14 | |
| A | CH-A- 640 906 (CORNAZ) * Seite 2, rechte Spalte, Zeilen 34-56; Figuren 1-3 * --- | 1,4,5, 11 | |
| A | DE-A-3 236 739 (SCHNEIDER) ----- | | |

| | |
|---|---|
| | **RECHERCHIERTE SACHGEBIETE (Int. Cl.4)** |
| | E 02 D A 01 G E 04 C E 01 F |

Der vorliegende Recherchenbericht wurde für alle Patentansprüche erstellt

| Recherchenort | Abschlußdatum der Recherche | Prüfer |
|---|---|---|
| DEN HAAG | 23-03-1989 | RUYMBEKE L.G.M. |

EPO FORM 1503 03.82 (P0403)

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

........................................................................
& : Mitglied der gleichen Patentfamilie, übereinstimmendes Dokument